# EUROPÄISCHE PATENTSCHRIFT

(11) **EP 3 616 836 B1**
(45) Veröffentlichungstag und Bekanntmachung des Hinweises auf die Patenterteilung: **21.07.2021**
(21) Anmeldenummer: 18192225.3
(22) Anmeldetag: 03.09.2018
(51) Int. Cl.: B23Q 39/02, B23Q 11/08, B23Q 3/157

(54) **BEARBEITUNGSEINRICHTUNG ZUR SPANENDEN BEARBEITUNG EINES WERKSTÜCKS**
MACHINING DEVICE FOR MACHINING A WORKPIECE
DISPOSITIF D'USINAGE DESTINÉ À L'USINAGE PAR ENLÈVEMENT DE COPEAUX D'UNE PIÈCE À USINER

(43) Veröffentlichungstag der Anmeldung: 04.03.2020
(73) Patentinhaber: AFW Holding GmbH, 4656 Kirchham (AT)
(72) Erfinder: Weingärtner, Dominik, 4643 Pettenbach (AT)
(74) Vertreter: Hafner & Kohl PartmbB

(56) Entgegenhaltungen:
- EP-A1- 0 949 029
- WO-A1-2008/013313
- DE-U1- 9 305 653

## Beschreibung

Die Erfindung betrifft eine Bearbeitungseinrichtung zur spanenden Bearbeitung eines Werkstücks, umfassend ein erstes Bearbeitungswerkzeug zur spanenden Bearbeitung eines vermittels der Bearbeitungseinrichtung spanend zu bearbeitenden Werkstücks und wenigstens ein zweites Bearbeitungswerkzeug zur spanenden Bearbeitung des oder eines zweiten vermittels der Bearbeitungseinrichtung spanend zu bearbeitenden Werkstücks.

Entsprechende Bearbeitungseinrichtungen zur spanenden Bearbeitung eines Werkstücks sind aus dem Gebiet der spanenden Werkstückbearbeitung in einer Vielzahl an unterschiedlichen Ausführungsformen dem Grunde nach bekannt.

Dabei sind auch Bearbeitungseinrichtungen bekannt, welche mehrere Bearbeitungswerkzeuge zur spanenden Bearbeitung eines spanend zu bearbeitenden Werkstücks umfassen. Entsprechende Bearbeitungseinrichtungen werden typischerweise zur Ausbildung komplexer Werkstückgeometrien, wie diese z. B. bei bestimmten Rotorbauelementen gegeben sein können, eingesetzt.

Die funktionelle wie auch konstruktive Auslegung entsprechender mehrere Bearbeitungswerkzeuge umfassender Bearbeitungseinrichtungen ist bisweilen aufwändig gelöst, sodass ein Verbesserungs- bzw. Weiterentwicklungsbedarf im Hinblick auf eine einfache, gleichwohl zuverlässige Konzipierung einer mehrere Bearbeitungswerkzeuge umfassenden Bearbeitungseinrichtung besteht.

EP 0 949 029 A1 offenbart eine Maschine zur mechanischen Bearbeitung stangenförmiger Werkstücke, welche ein Untergestell mit daran angeordneten Schlitten umfasst.

WO 2008/013313 A1 offenbart eine Bearbeitungseinrichtung zur mechanischen Bearbeitung von Werkstücken, welche an einem zentralen Lagerungskörper angeordnete Werkzeuge umfasst.

Der Erfindung liegt die Aufgabe zugrunde, eine einfache, gleichwohl zuverlässig konzipierte, mehrere Bearbeitungswerkzeuge umfassende Bearbeitungseinrichtung anzugeben.

Die Aufgabe wird durch die Gegenstände der unabhängigen Ansprüche, d. h. insbesondere durch eine Bearbeitungseinrichtung zur spanenden Bearbeitung eines Werkstücks gemäß Anspruch 1, gelöst. Die abhängigen Ansprüche betreffen vorteilhafte Ausführungsformen der Gegenstände der unabhängigen Ansprüche.

Die hierin beschriebene Bearbeitungseinrichtung dient im Allgemeinen zur spanenden Bearbeitung eines Werkstücks. Bei einem entsprechenden Werkstück kann es sich um ein längliches Werkstück, d. h. z. B. um einen Zylinder, handeln. Das zu bearbeitende Werkstück ist typischerweise aus einem spanend bearbeitbaren Metall gebildet.

Wie sich im Weiteren ergibt, ist die Bearbeitungseinrichtung typischerweise in einem übergeordneten Bearbeitungszentrum zur mechanischen, d. h. insbesondere spanenden, Bearbeitung von Werkstücken einsetzbar bzw. eingesetzt bzw. bildet einen Bestandteil eines solchen.

Die Bearbeitungseinrichtung umfasst mehrere Bearbeitungswerkzeuge zur spanenden Bearbeitung eines vermittels der Bearbeitungseinrichtung spanend zu bearbeitenden Werkstücks. Konkret umfasst die Bearbeitungseinrichtung ein erstes Bearbeitungswerkzeug zur spanenden Bearbeitung eines vermittels der Bearbeitungseinrichtung spanend zu bearbeitenden Werkstücks und wenigstens ein zweites bzw. weiteres Bearbeitungswerkzeug (im Weiteren als "zweites Bearbeitungswerkzeug" bezeichnet) zur spanenden Bearbeitung des oder eines vermittels der Bearbeitungseinrichtung spanend zu bearbeitenden Werkstücks.

Bei dem ersten Bearbeitungswerkzeug kann es sich im Allgemeinen um ein Dreh-, Bohr- oder Fräswerkzeug handeln. Auch bei dem zweiten Bearbeitungswerkzeug kann es sich im Allgemeinen um ein Bohr- oder Fräswerkzeug handeln. Im Besonderen kann es sich bei dem ersten Bearbeitungswerkzeug um ein Bohr- oder Schaftfräswerkzeug und bei dem zweiten Bearbeitungswerkzeug um ein Scheibenfräswerkzeug, insbesondere um ein profiliertes Scheibenfräswerkzeug, handeln. Die beispielhafte Kombination aus einem Bohr- oder Fräswerkzeug als erstem Bearbeitungswerkzeug und einem, insbesondere profilierten, Scheibenfräswerkzeug als zweitem Bearbeitungswerkzeug stellt eine bevorzugte Ausführungsform dar. Allgemein gilt, dass die konkrete Wahl der Bearbeitungswerkzeuge im Hinblick auf die vermittels der Bearbeitungseinrichtung durchzuführende spanende Bearbeitung eines Werkstücks respektive die damit auszubildende Werkstückgeometrie zu wählen ist.

Die Bearbeitungseinrichtung umfasst eine Lagerungseinrichtung. Die Lagerungseinrichtung ist zur Lagerung des ersten Bearbeitungswerkzeugs und des zweiten Bearbeitungswerkzeugs eingerichtet.

Die Lagerungseinrichtung umfasst einen Grundkörper, an welchem das erste und das zweite Bearbeitungswerkzeug lagerbar bzw. gelagert sind. Der Grundkörper umfasst typischerweise eine kurz als Grundkörpergehäuse bezeichnete, typischerweise zumindest abschnittsweise, insbesondere vollständig, geschlossene, Gehäusestruktur an oder in welcher bestimmte Funktionseinheiten, d. h. z. B. die Bearbeitungswerkzeuge, der Bearbeitungseinrichtung angeordnet oder ausgebildet sind. Das Grundkörpergehäuse kann einen Innenraum umfassen, in welchem bestimmte Funktionseinheiten der Bearbeitungseinrichtung angeordnet oder ausgebildet sind. Das Grundkörpergehäuse kann zumindest abschnittsweise, gegebenenfalls vollständig, von wenigstens einem Blenden- oder Wandungselement umgeben sein, welches die äußere Raumform des Grundkörpergehäuses (mit)bestimmt.

Zur Lagerung des ersten und zweiten Bearbeitungswerkzeugs an dem Grundkörper umfasst der Grundkörper bzw. das Grundkörpergehäuse typischerweise wenigstens eine erste Lagerungsschnittstelle zur Lagerung des bzw. eines ersten Bearbeitungswerkzeugs an dem Grundkörper bzw. an dem Grundkörpergehäuse und wenigstens eine zweite Lagerungsschnittstelle zur Lagerung des bzw. eines zweiten Bearbeitungswerkzeugs an dem Grundkörper bzw. an dem Grundkörpergehäuse. Eine entsprechende grundkörperseitige Lagerungsschnittstelle kann z. B. ein oder mehrere, insbesondere mechanische, Lagerungselemente umfassen, welche unmittelbar oder mittelbar mit einem oder mehreren, gegebenenfalls korrespondierenden, insbesondere mechanischen, Lagerungselementen seitens eines an dem Grundkörper bzw. dem Grundkörpergehäuse zu lagernden bzw. gelagerten Bearbeitungswerkzeugs zusammenwirken. Die Lagerung besteht typischerweise in einer bedarfsweise (beschädigungs- bzw. zerstörungsfrei) lösbaren Anbringung bzw. Befestigung eines jeweiligen Bearbeitungswerkzeugs an dem Grundkörper bzw. dem Grundkörpergehäuse.

Wesentlich ist, dass das erste Bearbeitungswerkzeug an einem ersten Grundkörperabschnitt bzw. ersten Grundkörpergehäuseabschnitt angeordnet oder ausgebildet bzw. gelagert ist und das zweite Bearbeitungswerkzeug an einem von dem ersten Grundkörperabschnitt verschiedenen zweiten Grundkörperabschnitt bzw. zweiten Grundkörpergehäuseabschnitt angeordnet oder ausgebildet bzw. gelagert ist. Wie sich im Weiteren ergibt, ist unter einem Grundkörperabschnitt bzw. Grundkörpergehäuseabschnitt insbesondere eine Grundkörperfläche bzw. eine bzw. Grundkörpergehäusefläche zu verstehen. Der Grundkörper ermöglicht damit eine Lagerung wenigstens zweier Bearbeitungswerkzeuge an unterschiedlichen Grundkörperabschnitten bzw. Grundkörperflächen und somit an unterschiedlichen Lagerungspositionen, insbesondere relativ zu einem vermittels der Bearbeitungseinrichtung zu bearbeitenden Werkstück. Die an dem Grundkörper bzw. Grundkörpergehäuse gelagerten Bearbeitungswerkzeuge können sonach, insbesondere relativ zueinander, in unterschiedlichen Lagerungspositionen und somit in unterschiedlichen Raumrichtungen bzw. Raumebenen lagerbar bzw. gelagert sein. Wie sich im Weiteren ergibt, ermöglicht die Lagerung des ersten Bearbeitungswerkzeugs an dem ersten Grundkörperabschnitt insbesondere eine seitliche Bearbeitung eines vermittels der Bearbeitungseinrichtung spanend zu bearbeitenden Werkstücks, d. h. z. B. eine Bearbeitung der Mantelfläche eines zylindrischen Werkstücks, und die Lagerung des zweiten Bearbeitungswerkzeugs an dem zweiten Grundkörperabschnitt insbesondere (auch) eine stirnseitige Bearbeitung eines vermittels der Bearbeitungseinrichtung spanend zu bearbeitenden Werkstücks, d. h. z. B. (auch) eine Bearbeitung der Stirnfläche eines zylindrischen Werkstücks.

Insgesamt liegt aufgrund der Lagerungseinrichtung respektive des dieser zugehörigen Grundkörpers eine vergleichsweise einfach konzipierte, gleichwohl zuverlässige und hochintegrierte Bearbeitungseinheit vor.

An und/oder in dem Grundkörper bzw. dem Grundkörpergehäuse können verschiedene Versorgungsleitungen, d. h. insbesondere den Bearbeitungswerkzeugen zuordenbare oder zugeordnete Versorgungsleitungen, d. h. z. B. elektrische Versorgungsleitungen, Kühlmittel- und/oder Schmiermittelversorgungsleitungen, angeordnet oder ausgebildet sein. Der Grundkörper bzw. das Grundkörpergehäuse kann, wie erwähnt, zumindest abschnittsweise wenigstens einen Innenraum aufweisen, in welchem entsprechende Versorgungsleitungen zumindest abschnittsweise angeordnet oder ausgebildet sind. Selbstverständlich können in dem oder einem entsprechenden Innenraum auch andere Funktionseinheiten der Bearbeitungseinrichtung angeordnet oder ausgebildet sein.

Der erste Grundkörperabschnitt kann im Bereich eines ersten freiliegenden Außenflächenabschnitts des Grundkörpers ausgebildet sein und der zweite Grundkörperabschnitt im Bereich eines von dem ersten freiliegenden Außenflächenabschnitts des Grundkörpers verschiedenen zweiten freiliegenden Außenflächenabschnitts des Grundkörpers ausgebildet sein. Die Bearbeitungswerkzeuge können sonach an unterschiedlichen Außenflächenabschnitten des Grundkörpers angeordnet oder ausgebildet und somit gelagert sein. Hierdurch ist typischerweise auch eine unterschiedliche räumliche Anordnung bezüglich eines vermittels der Bearbeitungseinrichtung spanend zu bearbeitenden Werkstücks gegeben und damit einhergehend eine hochintegrierte, d. h. insbesondere simultane, Bearbeitung des Werkstücks an bzw. in unterschiedlichen Werkstückabschnitten, möglich. Der erste freiliegende Außenflächenabschnitt des Grundkörpers kann insbesondere in einer ersten, insbesondere vertikal ausgerichteten, Raumebene angeordnet oder einer parallel zu einer solchen ausgerichtet sein und der zweite freiliegende Außenflächenabschnitt des Grundkörpers kann insbesondere in einer von der ersten Raumebene unterschiedlichen zweiten, insbesondere vertikal ausgerichteten, Raumebene angeordnet oder einer parallel zu einer solchen ausgerichtet sein. Die Lagerung des ersten Bearbeitungswerkzeugs an dem ersten freiliegenden Außenflächenabschnitt ermöglicht typischerweise die erwähnte seitliche Bearbeitung eines vermittels der Bearbeitungseinrichtung spanend zu bearbeitenden Werkstücks und die Lagerung des zweiten Bearbeitungswerkzeugs an dem zweiten freiliegenden Außenflächenabschnitt die erwähnte stirnseitige Bearbeitung eines vermittels der Bearbeitungseinrichtung spanend zu bearbeitenden Werkstücks.

Der Grundkörper kann eine durch eine mehreckige Grundfläche und eine mehreckige Deckfläche definierte Grundform, insbesondere eine prismen- oder quaderartige Grundform, aufweisen. Es kommen grundsätzlich sowohl regelmäßige als auch unregelmäßige prismen- oder quaderartige Grundformen in Betracht. Weiterhin kommen sowohl geometrisch definierte als auch geometrisch nicht definierte prismen- oder quaderartige Grundformen in Betracht. Gemäß einer bevorzugten Ausführungsform weist der Grundkörper eine prismenartige bzw. -förmige Grundform auf. Gemäß einer besonders bevorzugten Ausführungsform weist der Grundkörper eine quaderartige bzw. -förmige Grundform auf; diese beinhaltet auch eine würfelartige bzw. -förmige Grundform. Der Grundkörper kann im Allgemeinen eine turmartige bzw. -förmige geometrische Gestalt aufweisen; der Grundkörper kann sonach als Lagerturm bzw. Turm bezeichnet bzw. erachtet werden.

Ausgehend von einer beispielhaften prismen- bzw. quaderartigen Grundform des Grundkörpers kann das erste Bearbeitungswerkzeug an einer ersten (ebenen) Fläche des Grundkörpers, insbesondere einer ersten Seitenfläche des Grundkörpers, angeordnet oder ausgebildet bzw. gelagert sein und das wenigstens eine zweite Bearbeitungswerkzeug an einer von der ersten Fläche verschiedenen zweiten (ebenen) Fläche des Grundkörpers, insbesondere einer von der ersten Seitenfläche verschiedenen zweiten Seitenfläche des Grundkörpers, angeordnet oder ausgebildet bzw. gelagert sein. Bei den beiden Seitenflächen handelt es sich typischerweise nicht um Grund- bzw. Stirnflächen des Grundkörpers.

Die erste Fläche bzw. ersten Seitenfläche des Grundkörpers kann um einen Winkel kleiner 180°, insbesondere um einen Winkel von 135°, 128,5°, 120°, 108°, 90° oder 60°, versetzt zu der zweiten Fläche bzw. zweiten Seitenfläche des Grundkörpers angeordnet und/oder ausgerichtet sein oder umgekehrt. Der tatsächliche Winkelversatz bestimmt sich durch die konkrete Grundform des Grundkörpers. Die beispielhaft genannten Winkel 135°, 128,5°, 120°, 108°, 90° oder 60° beziehen sich in entsprechender Reihenfolge auch auf einen eine achteckige, siebeneckige, sechseckige, fünfeckige, viereckige oder dreieckige Grundform aufweisenden Grundkörper.

Unabhängig von der konkreten Geometrie des Grundkörpers ist das erste Bearbeitungswerkzeug in einem Schwenkbewegungsfreiheitsgrad relativ zu dem Grundkörper an dem Grundkörper gelagert und das zweite Bearbeitungswerkzeug in einem Schwenkbewegungsfreiheitsgrad relativ zu dem Grundkörper an dem Grundkörper gelagert. Schwenkbewegungen können insbesondere um horizontal oder um vertikal ausgerichtete Schwenkachsen erfolgen. Erfindungsgemäß ist eine schwenkbare Lagerung des ersten Bearbeitungswerkzeugs um eine horizontal ausgerichtete Achse (y-Achse) und eine schwenkbare Lagerung des zweiten Bearbeitungswerkzeugs um eine vertikal ausgerichtete Achse (x-Achse) vorgesehen. Selbstverständlich sind kombinierte Bewegungen eines jeweiligen Bearbeitungswerkzeugs in unterschiedlichen Bewegungsfreiheitsgraden möglich. Die beiden Bearbeitungswerkzeuge können dabei abhängig oder unabhängig voneinander in wenigstens einem Bewegungsfreiheitsgrad bewegbar bzw. bewegt sein; mithin kann das erste Bearbeitungswerkzeug z. B. in einem ersten translatorischen und/oder ersten rotatorischen Bewegungsfreiheitsgrad bewegbar sein und das zweite Bearbeitungswerkzeug abhängig oder unabhängig davon z. B. in einem zweiten translatorischen und/oder zweiten rotatorischen Bewegungsfreiheitsgrad bewegbar bzw. bewegt sein, oder umgekehrt. In allen Fällen können geeignete Führungselemente, d. h. z. B. Führungsöffnungen, -schlitze, etc., vorhanden sein, um eine entsprechende geführte Bewegung eines bewegbar gelagerten Bearbeitungswerkzeugs in einem entsprechenden Bewegungsfreiheitsgrad zu ermöglichen. In allen Fällen ist einem jeweiligen Bearbeitungswerkzeug typischerweise wenigstens eine, insbesondere motorische, Antriebseinrichtung zugeordnet, welche zur Erzeugung einer das jeweilige Bearbeitungswerkzeug in einem jeweiligen Bewegungsfreiheitsgrad versetzende Kraft eingerichtet ist.

Ein jeweiliges Bearbeitungswerkzeug kann grundsätzlich unmittelbar oder mittelbar, d. h. unter Zwischenschaltung wenigstens einer Baugruppe, an dem Grundkörper angeordnet oder ausgebildet sein.

Eine mittelbare Anordnung bzw. Ausbildung eines Bearbeitungswerkzeugs an dem Grundkörper ist typischerweise über einen dem jeweiligen Bearbeitungswerkzeug zugeordneten Bearbeitungskopf realisiert. Mithin kann das erste Bearbeitungswerkzeug an einem an dem Grundkörper gelagerten ersten Bearbeitungskopf angeordnet oder ausgebildet sein und/oder das zweite Bearbeitungswerkzeug an einem an dem Grundkörper gelagerten zweiten Bearbeitungskopf angeordnet oder ausgebildet sein. Ein Bearbeitungskopf umfasst typischerweise eine Kopplungsschnittstelle zur Ankopplung eines Bearbeitungswerkzeugs und eine, insbesondere motorische, Antriebseinrichtung zur Erzeugung einer auf das jeweilig angekoppelte Bearbeitungswerkzeug übertragbaren bzw. im Betrieb des Bearbeitungswerkzeugs übertragenen, das Bearbeitungswerkzeug in eine Bewegung, d. h. insbesondere eine Drehbewegung, versetzenden Antriebskraft. Die Kopplungsschnittstelle ist typischerweise an oder in einer Gehäusestruktur des Bearbeitungskopfs angeordnet oder ausgebildet. Die Antriebseinrichtung ist typischerweise an oder in einer Gehäusestruktur des Bearbeitungskopfs angeordnet oder ausgebildet. Die Antriebseinrichtung ist typischerweise innerhalb der Gehäusestruktur angeordnet oder ausgebildet.

Ein Bearbeitungskopf umfasst sonach typischerweise eine kurz als Bearbeitungskopfgehäuse bezeichnete, typischerweise zumindest abschnittsweise, insbesondere vollständig, geschlossene, Gehäusestruktur an oder in welcher bestimmte Funktionseinheiten des Bearbeitungskopfs angeordnet oder ausgebildet sind. Das Bearbeitungskopfgehäuse umfasst typischerweise einen Bearbeitungskopfgehäuseinnenraum, in welchem bestimmte Funktionseinheiten des Bearbeitungskopfs angeordnet oder ausgebildet sind. Das Bearbeitungskopfgehäuse kann zumindest abschnittsweise, gegebenenfalls vollständig, von wenigstens einem Blenden- bzw. Wandungselement umgeben sein, welches die äußere Raumform des Bearbeitungskopfgehäuses (mitbestimmt.

Alternativ oder ergänzend kann eine mittelbare Lagerung eines Bearbeitungswerkzeugs bzw. eines einem jeweiligen Bearbeitungswerkzeug zugeordneten Bearbeitungskopfs an dem Grundkörper beispielsweise über eine dem jeweiligen Bearbeitungswerkzeug zugeordnete Trageinrichtung realisiert sein. Mithin kann das erste Bearbeitungswerkzeug an einer an dem Grundkörper gelagerten ersten Trageinrichtung angeordnet oder ausgebildet sein und/oder das zweite Bearbeitungswerkzeug an einer an dem Grundkörper gelagerten zweiten Trageinrichtung angeordnet oder ausgebildet sein. Eine Trageinrichtung umfasst typischerweise eine Kopplungsschnittstelle zur Ankopplung eines Bearbeitungswerkzeugs bzw. eines Bearbeitungskopfs. Die Kopplungsschnittstelle ist typischerweise an oder in einer Gehäusestruktur der Trageinrichtung angeordnet oder ausgebildet. Die Trageinrichtung kann z. B. als Tragarm ausgebildet sein oder wenigstens einen solchen umfassen.

Typischerweise ist das erste Bearbeitungswerkzeug bzw. ein dem ersten Bearbeitungswerkzeug zugeordneter erster Bearbeitungskopf über eine entsprechende Trageinrichtung an dem Grundkörper gelagert.

Es wurde erwähnt, dass das erste Bearbeitungswerkzeug und/oder zweite Bearbeitungswerkzeug in wenigstens einem translatorischen und/oder rotatorischen Bewegungsfreiheitsgrad relativ zu dem Grundkörper an dem Grundkörper angeordnet oder ausgebildet sein kann. Entsprechend kann auch eine Trageinrichtung in wenigstens einem translatorischen und/oder rotatorischen Bewegungsfreiheitsgrad relativ zu dem Grundkörper an dem Grundkörper angeordnet oder ausgebildet sein.

Die Bearbeitungseinrichtung kann (insgesamt) bewegbar gelagert sein. Wie sich im Weiteren im Zusammenhang mit dem neben der Bearbeitungseinrichtung ebenso einen Aspekt der hierin beschriebenen Erfindung bildenden Bearbeitungszentrum ergibt, kann die Bearbeitungseinrichtung insbesondere in wenigstens eine Werkstückbearbeitungsposition und in wenigstens eine Bearbeitungswerkzeugwechselposition bewegt werden. Die Bewegung der Bearbeitungseinrichtung erfolgt typischerweise (zumindest) in oder parallel zu der Maschinenachse (z-Achse) eines mit der Bearbeitungseinrichtung ausgestatteten Bearbeitungszentrums. Zur Realisierung einer Bewegung der Bearbeitungseinrichtung kann diese wenigstens eine wenigstens eine dem Grundkörper zugeordnete, insbesondere motorische, Antriebseinrichtung, welche zur Erzeugung einer die Bearbeitungseinrichtung bzw. den Grundkörper in eine Bewegung, insbesondere von einer ersten Werkstückbearbeitungsposition in wenigstens eine von der ersten Werkstückbearbeitungsposition verschiedene zweite Werkstückbearbeitungsposition und/oder in eine Bearbeitungswerkzeugwechselposition, versetzenden Antriebskraft eingerichtet ist, umfassen. Die Antriebseinrichtung kann z. B. in den Grundkörper integriert sein.

Wie angedeutet, betrifft ein weiterer Aspekt der hierin beschriebenen Erfindung ein Bearbeitungszentrum zur spanenden Bearbeitung eines Werkstücks. Die Erfindung betrifft sonach auch ein Bearbeitungszentrum zur spanenden Bearbeitung eines Werkstücks. Das Bearbeitungszentrum umfasst wenigstens eine wie hierin beschriebene Bearbeitungseinrichtung. Mithin gelten sämtliche Ausführungen im Zusammenhang mit der Bearbeitungseinrichtung analog für das Bearbeitungszentrum.

Das Bearbeitungszentrum kann z. B. als kombiniertes Bohr-Fräszentrum oder als kombiniertes Fräs-Fräszentrum oder als kombiniertes Dreh-Fräszentrum ausgebildet sein. Vermittels des Bearbeitungszentrums lassen sich sonach, insbesondere simultan, wenigstens zwei gleiche oder verschiedene spanende Bearbeitungsprozesse eines spanend zu bearbeitenden Werkstücks durchführen. Neben der hierin beschriebenen Bearbeitungseinrichtung, welche typischerweise zum Bohren und/oder Drehen und/oder Fräsen eingerichtet ist, kann das Bearbeitungszentrum wenigstens eine weitere Bearbeitungseinrichtung z. B. in Form einer Dreheinrichtung umfassen, sodass kombinierte Bohr- und/oder Fräs- und/oder Drehvorgänge durchführbar sind. Das Bearbeitungszentrum umfasst typischerweise im Hinblick auf den jeweils konkret durchzuführenden spanenden Bearbeitungsvorgang geeignete Werkstückabstützeinrichtungen bzw. Werkstückspanneinrichtungen, z. B. in Form von Lünetten, Reitstöcken, Spannfuttern, etc.

Das Bearbeitungszentrum kann wenigstens eine lager- oder magazinartige, insbesondere im Bereich eines Endes der bzw. einer Bearbeitungsachse des Bearbeitungszentrums angeordnete oder ausgebildete, wenigstens einen lager- oder magazinartigen Aufnahmeraum zur Aufnahme von einem oder mehreren an der bearbeitungseinrichtungsseitigen Lagerungseinrichtung lagerbaren oder zu lagernden Bearbeitungswerkzeugen umfassende Aufnahmeeinrichtung umfassen. Mithin können in dem Bearbeitungszentrum verschiedene Bearbeitungswerkzeuge gelagert bzw. vorgehalten werden, was einen einfachen und schnellen Bearbeitungswerkzeugwechsel ermöglicht. Insbesondere ist ein teil- bzw. vollautomatisiert erfolgender Bearbeitungswerkzeugwechsel möglich.

Ein entsprechender aufnahmeeinrichtungsseitiger Aufnahmeraum kann ein oder mehrere Aufnahmeabteile zur jeweiligen Aufnahme wenigstens eines Bearbeitungswerkzeugs umfassen. Jeweilige Aufnahmeabteile können regalartig z. B. in Reihen und/oder Spalten oder trommelartig angeordnet sein. Jeweilige Aufnahmeabteile können mit geeigneten Sensoreinrichtungen, d. h. z. B. Gewichtsensoren, optischen Sensoren, etc., versehen sein, um z. B. zu ermitteln, ob sich ein Bearbeitungswerkzeug in einem Aufnahmeabteil befindet bzw. welches Bearbeitungswerkzeug sich in welchem Aufnahmeabteil befindet. Entsprechende Informationen können datenmäßig in den seitens entsprechender Sensoreinrichtungen erzeugten Sensorinformationen enthalten sein. Einem Benutzer kann vermittels der seitens entsprechender Sensoreinrichtungen erzeugten Sensorinformationen sonach ein umfassendes Abbild über die aktuelle und gegebenenfalls auch künftige Belegung des Aufnahmeraums mit Bearbeitungswerkzeugen gegeben werden. Selbstverständlich lassen sich entsprechende Sensorinformationen vermittels geeigneter Datenübertragungseinrichtungen bzw. -verbindungen grundsätzlich an beliebige Kommunikationspartner, d. h. z. B. eine Fertigungs- bzw. Steuerzentrale, übertragen. Analoges gilt für die Aufnahme eines oder mehrerer Bearbeitungsköpfe in dem aufnahmeeinrichtungsseitigen Aufnahmeraum.

Ein jeweiliger aufnahmeeinrichtungsseitiger Aufnahmeraum kann eine definierte Aufnahmeachse aufweisen, in bzw. entlang welcher entsprechende Bearbeitungswerkzeuge in dem Aufnahmeraum angeordnet werden können. Eine entsprechende Aufnahmeachse kann mit einer Lagerungsachse eines an dem Grundkörper gelagerten Bearbeitungswerkzeugs fluchten, was einen einfachen und schnellen Wechsel von Bearbeitungswerkzeugen begünstigen kann. Analoges gilt wiederum für die Aufnahme eines oder mehrerer Bearbeitungsköpfe in dem aufnahmeeinrichtungsseitigen Aufnahmeraum.

Wie erwähnt, kann der bearbeitungseinrichtungsseitige Grundkörper bewegbar gelagert sein, d. h. insbesondere in wenigstens eine Werkstückbearbeitungsposition und in wenigstens eine Bearbeitungswerkzeugwechselposition bewegt werden. Der bearbeitungseinrichtungsseitige Grundkörper kann sonach insbesondere in eine Bearbeitungswerkzeugwechselposition bewegbar sein, in welcher der Grundkörper relativ zu der Aufnahmeeinrichtung bzw. einem aufnahmeeinrichtungsseitigen Aufnahmeraum bewegt ist, sodass wenigstens ein an dem Grundkörper gelagertes Bearbeitungswerkzeug, d. h. z. B. das zweite Bearbeitungswerkzeug, und/oder ein an dem Grundkörper gelagerter Bearbeitungskopf, insbesondere nebst einem an diesem angekoppelten Bearbeitungswerkzeug, in einen aufnahmeeinrichtungsseitigen Aufnahmeraum übergebbar ist. Alternativ oder ergänzend kann der Grundkörper in eine Bearbeitungswerkzeugwechselposition bewegbar sein, in welcher der Grundkörper relativ zu der Aufnahmeeinrichtung bzw. einem aufnahmeeinrichtungsseitigen Aufnahmeraum bewegt ist, sodass wenigstens ein in dem bzw. einem aufnahmeeinrichtungsseitigen Aufnahmeraum aufgenommenes Bearbeitungswerkzeug, d. h. z. B. ein zweites Bearbeitungswerkzeug, und/oder ein in dem bzw. einem aufnahmeeinrichtungsseitigen Aufnahmeraum aufgenommener Bearbeitungskopf, insbesondere nebst einem an diesem angekoppelten Bearbeitungswerkzeug, aus einem aufnahmeeinrichtungsseitigen Aufnahmeraum an den Grundkörper übergebbar ist.

Der in die Bearbeitungswerkzeugwechselposition bewegte Grundkörper kann derart an oder in der Aufnahmeeinrichtung respektive einem aufnahmeeinrichtungsseitigen Aufnahmeraum angeordnet sein, dass wenigstens ein an dem Grundkörper gelagertes Bearbeitungswerkzeug, d. h. z. B. das zweite Bearbeitungswerkzeug, und/oder ein an dem Grundkörper gelagerter Bearbeitungskopf, insbesondere nebst einem an diesem angekoppelten Bearbeitungswerkzeug, in einen aufnahmeeinrichtungsseitigen Aufnahmeraum übergebbar ist und/oder dass wenigstens ein in dem bzw. einem aufnahmeeinrichtungsseitigen Aufnahmeraum aufgenommenes Bearbeitungswerkzeug, d. h. z. B. ein zweites Bearbeitungswerkzeug, und/oder ein in dem bzw. einem aufnahmeeinrichtungsseitigen Aufnahmeraum aufgenommener Bearbeitungskopf, insbesondere nebst einem an diesem angekoppelten Bearbeitungswerkzeug, aus einem aufnahmeeinrichtungsseitigen Aufnahmeraum an den Grundkörper übergebbar ist. Der Grundkörper kann in der Bearbeitungswerkzeugwechselposition zumindest abschnittsweise, insbesondere vollständig, in dem bearbeitungszentrumseitigen Bearbeitungsraum angeordnet sein, dies ist insbesondere der Fall, wenn der Grundkörper in der Bearbeitungswechselposition an der Aufnahmeeinrichtung respektive einem aufnahmeeinrichtungsseitigen Aufnahmeraum angeordnet ist. Alternativ kann der Grundkörper in der Bearbeitungswerkzeugwechselposition zumindest abschnittsweise, insbesondere vollständig, in dem aufnahmeeinrichtungsseitigen Aufnahmeraum angeordnet sein, dies ist insbesondere der Fall, wenn der Grundkörper in der Bearbeitungswerkzeugwechselposition in der Aufnahmeeinrichtung respektive einem aufnahmeeinrichtungsseitigen Aufnahmeraum angeordnet ist.

Der Grundkörper kann sonach für einen Wechsel wenigstens eines Bearbeitungswerkzeugs und/oder -kopfs aus dem Bearbeitungsraum in den Aufnahmeraum bewegt werden (und umgekehrt). Der Grundkörper ist dabei typischerweise derart weit in den Aufnahmeraum bewegt, dass ein zu wechselndes Bearbeitungswerkzeug in eine Position relativ zu einer innerhalb des Aufnahmeraums befindlichen Lagerungsposition eines zu wechselnden Bearbeitungswerkzeugs und/oder -kopfs bewegt ist, welche eine entsprechenden Wechsel des Bearbeitungswerkzeugs und/oder -kopfs ermöglicht.

Das Bearbeitungszentrum kann zur Handhabung jeweiliger Bearbeitungswerkzeuge bzw. -köpfe wenigstens eine Handhabungseinrichtung umfassen. Eine entsprechende Handhabungseinrichtung ist zweckmäßig zur Realisierung einer automatisierbaren bzw. automatisierten Handhabung jeweiliger Bearbeitungswerkzeuge bzw. -köpfe bzw., insbesondere im Zusammenhang mit der Übergabe von Bearbeitungswerkzeugen bzw. -köpfen in bzw. aus einem entsprechenden Aufnahmeraum eingerichtet. Eine entsprechende Handhabungseinrichtung kann z. B. als eine wenigstens ein Greiferelement umfassende Greifereinrichtung ausgebildet sein oder wenigstens eine solche umfassen. Eine Greifereinrichtung kann z. B. als ein (mehrachsiger) Greifroboter ausgebildet sein.

Die Aufnahmeeinrichtung bzw. ein aufnahmeeinrichtungsseitiger Aufnahmeraum kann durch eine wenigstens ein in einem translatorischen und/oder rotatorischen Bewegungsfreiheitsgrad bewegbar gelagertes Abtrennelement umfassende Abtrenneinrichtung von einem Bearbeitungsraum des Bearbeitungszentrums, in welchem die eigentliche spanende Werkstückbearbeitung durchgeführt wird, abtrennbar sein. Die sonach gegebene Möglichkeit einer bedarfsweisen Abtrennung der Aufnahmeeinrichtung bzw. eines aufnahmeeinrichtungsseitigen Aufnahmeraums von dem Bearbeitungsraum ist vorteilhaft, als diese Tätigkeiten innerhalb des Aufnahmeraums unabhängig von der Durchführung eines Bearbeitungsvorgangs erlaubt; mithin ist es möglich, Tätigkeiten innerhalb des Aufnahmeraums, z. B. im Zusammenhang mit einem bevorstehenden oder abgeschlossenen Bearbeitungswerkzeugwechsel, während der Durchführung eines Bearbeitungsvorgangs vorzunehmen, als die Abtrennung des Aufnahmeraums von dem Bearbeitungsraum z. B. sicherstellt, dass z. B. keine Späne in den Aufnahmeraum gelangen können. Konkret kann die Bestückung des Aufnahmeraums mit bestimmten Bearbeitungswerkzeugen sonach während der Durchführung eines Bearbeitungsvorgangs vorgenommen werden, was, insbesondere für eine manuelle Bestückung des Aufnahmeraums, ohne eine entsprechende Abtrennmöglichkeit aus sicherheitstechnischen Aspekten nicht bzw. kaum möglich wäre.

Das bewegbar gelagerte Abtrennelement kann insbesondere zwischen einer Offenstellung, in welcher eine Zugangsmöglichkeit aus einem Bearbeitungsraum des Bearbeitungszentrums zu der Aufnahmeeinrichtung bzw. einem aufnahmeeinrichtungsseitigen Aufnahmeraum und eine Zugangsmöglichkeit aus der Aufnahmeeinrichtung bzw. einem aufnahmeeinrichtungsseitigen Aufnahmeraum in den Bearbeitungsraum des Bearbeitungszentrums möglich ist, und einer Schließstellung, in welcher eine Zugangsmöglichkeit aus einem Bearbeitungsraum des Bearbeitungszentrums zu der Aufnahmeeinrichtung bzw. zu einem aufnahmeeinrichtungsseitigen Aufnahmeraum und eine Zugangsmöglichkeit aus der Aufnahmeeinrichtung bzw. aus einem aufnahmeeinrichtungsseitigen Aufnahmeraum in den Bearbeitungsraum des Bearbeitungszentrums nicht möglich ist, bewegbar gelagert sein. Bei dem bewegbar gelagerten Abtrennelement kann es sich z. B. um ein Fenster, ein Tor oder eine Tür handeln.

Bewegungen des Grundkörpers, insbesondere zwischen jeweiligen Bearbeitungs- und Bearbeitungswerkzeugwechselpositionen, des oder der Handhabungseinrichtung bzw. der der Handhabungseinrichtung zugehörigen Handhabungselemente sowie des oder der der Abtrenneinrichtung zugehörigen Abtrennelemente erfolgen typischerweise durch eine hard- und/oder softwaremäßig implementierte bearbeitungszentrumseitige Steuereinrichtung. Die Steuereinrichtung ist sonach zur Erzeugung von Bewegungen des Grundkörpers, insbesondere zwischen jeweiligen Bearbeitungs- und Bearbeitungswerkzeugwechselpositionen, des oder der der Handhabungseinrichtung zugehörigen Handhabungselemente sowie des oder der der Abtrenneinrichtung zugehörigen Abtrennelemente steuernden Steuerinformationen eingerichtet.

Mit der hierin beschriebenen Bearbeitungseinrichtung respektive dem hierin beschriebenen Bearbeitungszentrum lässt sich ein Verfahren zur spanenden Bearbeitung eines spanend zu bearbeitenden Werkstücks implementieren, welches ebenso einen Bestandteil der Erfindung darstellt. Zur Durchführung des Verfahrens wird wenigstens eine entsprechende Bearbeitungseinrichtung oder ein entsprechendes Bearbeitungszentrum verwendet.

Die Erfindung ist anhand eines Ausführungsbeispiels in den Zeichnungen erläutert. Dabei zeigt:

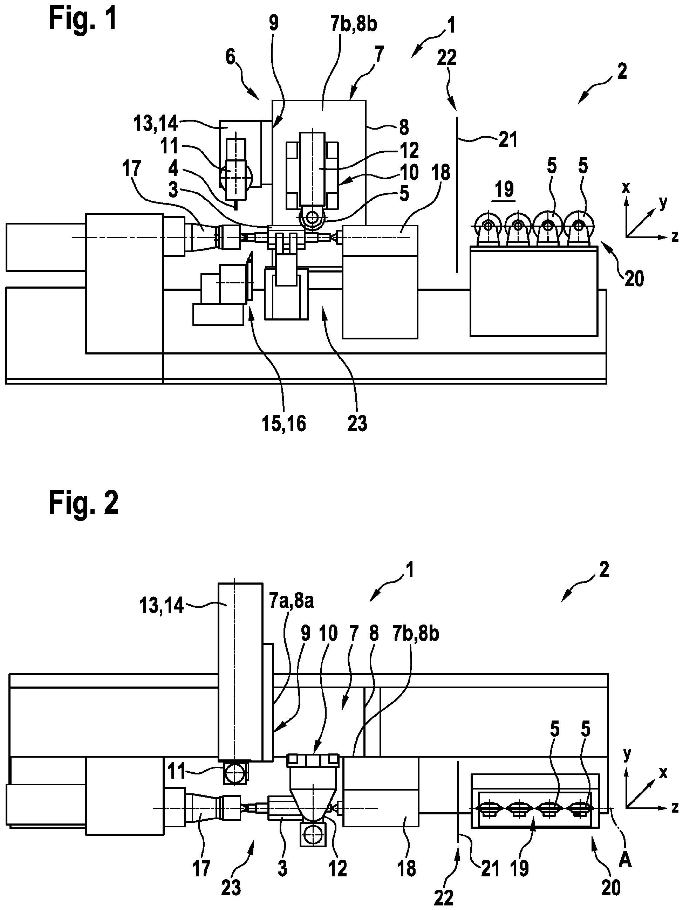

- Fig. 1 - 4: je eine Prinzipdarstellung einer Bearbeitungseinrichtung sowie eines Bearbeitungszentrums gemäß einem Ausführungsbeispiel.

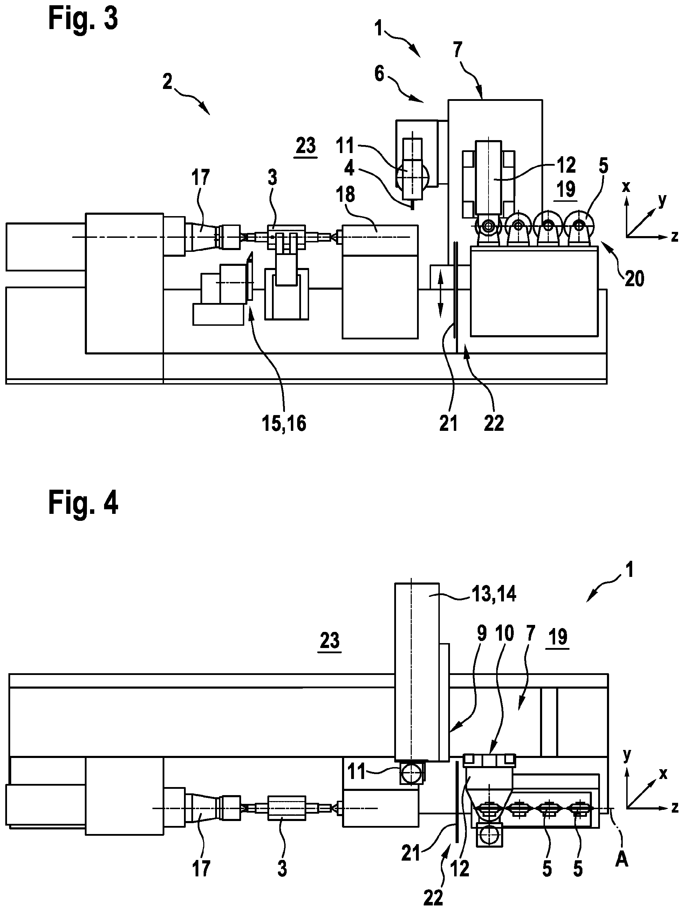

Die Fig. 1 - 4 zeigen eine Prinzipdarstellung einer Bearbeitungseinrichtung 1 sowie eines Bearbeitungszentrums 2 gemäß einem Ausführungsbeispiel. Die Bearbeitungseinrichtung 1 und das Bearbeitungszentrum sind in Fig. 1 und Fig. 3 in einer Seitenansicht und in Fig. 2 und Fig. 4 in einer Aufsicht gezeigt. Ersichtlich stellt die Bearbeitungseinrichtung 1 einen Bestandteil des dieser übergeordneten Bearbeitungszentrums 2 dar.

Die Bearbeitungseinrichtung 1 und somit auch das Bearbeitungszentrum 2 dient zur spanenden Bearbeitung eines Werkstücks 3. Das aus einem spanend bearbeitbaren Metall gebildet Werkstück 3 weist in dem in den Fig. gezeigten Ausführungsbeispiel beispielhaft eine längliche zylindrische Geometrie auf.

Die Bearbeitungseinrichtung 1 umfasst ein erstes Bearbeitungswerkzeug 4 zur spanenden Bearbeitung des vermittels der Bearbeitungseinrichtung 1 spanend zu bearbeitenden Werkstücks 3 und ein zweites Bearbeitungswerkzeug 5 zur spanenden Bearbeitung des vermittels der Bearbeitungseinrichtung 1 spanend zu bearbeitenden Werkstücks 3.

Bei dem ersten Bearbeitungswerkzeug 4 handelt es sich in dem in den Fig. gezeigten Ausführungsbeispiel um ein Bohr- oder Schaftfräswerkzeug und bei dem zweiten Bearbeitungswerkzeug 5 um ein Scheibenfräswerkzeug, insbesondere um ein profiliertes Scheibenfräswerkzeug. Allgemein gilt, dass die konkrete Wahl der Bearbeitungswerkzeuge 4, 5 im Hinblick auf die vermittels der Bearbeitungseinrichtung 1 durchzuführende spanende Bearbeitung eines Werkstücks 3 respektive die damit auszubildende Werkstückgeometrie gewählt ist.

Die Bearbeitungseinrichtung 1 umfasst eine Lagerungseinrichtung 6 zur Lagerung des ersten Bearbeitungswerkzeugs 4 und des zweiten Bearbeitungswerkzeugs 5.

Die Lagerungseinrichtung 6 umfasst einen Grundkörper 7, an welchem das erste und das zweite Bearbeitungswerkzeug 4, 5 gelagert sind. Der Grundkörper 7 umfasst eine als Grundkörpergehäuse 8 bezeichnete Gehäusestruktur an oder in welcher bestimmte Funktionseinheiten, d. h. z. B. die Bearbeitungswerkzeuge 4, 5, der Bearbeitungseinrichtung 1 angeordnet oder ausgebildet sind. Das Grundkörpergehäuse 8 kann einen Innenraum umfassen, in welchem bestimmte Funktionseinheiten der Bearbeitungseinrichtung 1 angeordnet oder ausgebildet sind. Das Grundkörpergehäuse 8 kann zumindest abschnittsweise, gegebenenfalls vollständig, von wenigstens einem Blenden- oder Wandungselement umgeben sein, welches die äußere Raumform des Grundkörpergehäuses 8 (mitbestimmt.

Zur Lagerung des ersten und zweiten Bearbeitungswerkzeugs 4, 5 an dem Grundkörper 7 umfasst der Grundkörper 7 bzw. das Grundkörpergehäuse 8 eine erste Lagerungsschnittstelle 9 zur Lagerung des ersten Bearbeitungswerkzeugs 4 an dem Grundkörper 7 bzw. an dem Grundkörpergehäuse 8 und eine zweite Lagerungsschnittstelle 10 zur Lagerung des zweiten Bearbeitungswerkzeugs 5 an dem Grundkörper 7 bzw. an dem Grundkörpergehäuse 8. Eine entsprechende grundkörperseitige Lagerungsschnittstelle 9, 10 kann z. B. ein oder mehrere, insbesondere mechanische, Lagerungselemente (nicht explizit benannt) umfassen, welche unmittelbar oder mittelbar mit einem oder mehreren, gegebenenfalls korrespondierenden, insbesondere mechanischen, Lagerungselementen (nicht explizit benannt) seitens eines an dem Grundkörper 7 bzw. dem Grundkörpergehäuse 8 zu lagernden bzw. gelagerten Bearbeitungswerkzeugs 4, 5 zusammenwirken. Die Lagerung besteht typischerweise in einer bedarfsweise (beschädigungs- bzw. zerstörungsfrei) lösbaren Anbringung bzw. Befestigung eines jeweiligen Bearbeitungswerkzeugs 4, 5 an dem Grundkörper 7 bzw. dem Grundkörpergehäuse 8.

In dem in den Fig. gezeigten Ausführungsbeispiel sind die Bearbeitungswerkzeuge 4, 5 jeweils über einen diesen jeweils zugeordneten Bearbeitungskopf 11, 12 an dem Grundkörper 7 bzw. dem Grundkörpergehäuse 8 gelagert. Für das erste Bearbeitungswerkzeug 4 gilt zudem, dass der diesem zugeordnete erste Bearbeitungskopf 11 an einer durch einen Tragarm 13 gebildeten Trageinrichtung 14 an dem Grundkörper 7 bzw. dem Grundkörpergehäuse 8 gelagert ist. Die Bearbeitungswerkzeuge 4, 5 sind sonach mittelbar, d. h. unter Zwischenschaltung wenigstens einer Baugruppe, an dem Grundkörper 7 bzw. dem Grundkörpergehäuse 8 angeordnet oder ausgebildet.

Wesentlich ist, dass das erste Bearbeitungswerkzeug 4 an einem ersten Grundkörperabschnitt 7a bzw. ersten Grundkörpergehäuseabschnitt 8a gelagert ist und das zweite Bearbeitungswerkzeug 5 an einem von dem ersten Grundkörperabschnitt 7a bzw. ersten Grundkörpergehäuseabschnitt 8a verschiedenen zweiten Grundkörperabschnitt 7b bzw. zweiten Grundkörpergehäuseabschnitt 8b gelagert ist. Der Grundkörper 7 ermöglicht damit eine Lagerung wenigstens zweier Bearbeitungswerkzeuge 4, 5 an unterschiedlichen Grundkörperabschnitten 7a, 7b und somit an unterschiedlichen Lagerungspositionen, insbesondere relativ zu dem vermittels der Bearbeitungseinrichtung 1 zu bearbeitenden Werkstück 3.

Die an dem Grundkörper 7 bzw. Grundkörpergehäuse 8 gelagerten Bearbeitungswerkzeuge 4, 5 sind sonach, insbesondere relativ zueinander, in unterschiedlichen Lagerungspositionen und somit in unterschiedlichen Raumrichtungen bzw. Raumebenen lagerbar bzw. gelagert. Die Lagerung des ersten Bearbeitungswerkzeugs 4 an dem ersten Grundkörperabschnitt 7a ermöglicht eine seitliche Bearbeitung des vermittels der Bearbeitungseinrichtung 1 spanend zu bearbeitenden Werkstücks 3, d. h. eine Bearbeitung der Mantelfläche des Werkstücks 3, die Lagerung des zweiten Bearbeitungswerkzeugs 5 an dem zweiten Grundkörperabschnitt 7b ermöglicht (auch) eine stirnseitige Bearbeitung des vermittels der Bearbeitungseinrichtung 1 spanend zu bearbeitenden Werkstücks 3, d. h. (auch) eine Bearbeitung der Stirnfläche des Werkstücks 3.

Ersichtlich ist der erste Grundkörperabschnitt 7a im Bereich eines ersten freiliegenden Außenflächenabschnitts des Grundkörpers 7 und der zweite Grundkörperabschnitt 7b im Bereich eines von dem ersten freiliegenden Außenflächenabschnitts des Grundkörpers 7 verschiedenen zweiten freiliegenden Außenflächenabschnitts des Grundkörpers 7 ausgebildet. Die Bearbeitungswerkzeuge 4, 5 sind sonach an unterschiedlichen Außenflächenabschnitten des Grundkörpers 7 gelagert. Hierdurch ist auch eine unterschiedliche räumliche Anordnung bezüglich des vermittels der Bearbeitungseinrichtung 1 spanend zu bearbeitenden Werkstücks 3 gegeben und damit einhergehend eine hochintegrierte, d. h. insbesondere simultane, Bearbeitung des Werkstücks 3 an bzw. in unterschiedlichen Werkstückabschnitten, möglich. Der erste freiliegende Außenflächenabschnitt des Grundkörpers 7 ist in einer ersten, insbesondere vertikal ausgerichteten, Raumebene angeordnet oder einer parallel zu einer solchen ausgerichtet, der zweite freiliegende Außenflächenabschnitt des Grundkörpers 7 ist in einer von der ersten Raumebene unterschiedlichen zweiten, insbesondere vertikal ausgerichteten, Raumebene angeordnet oder einer parallel zu einer solchen ausgerichtet. Die Lagerung des ersten Bearbeitungswerkzeugs 4 an dem ersten freiliegenden Außenflächenabschnitt ermöglicht die erwähnte seitliche Bearbeitung des vermittels der Bearbeitungseinrichtung 1 spanend zu bearbeitenden Werkstücks 3, die Lagerung des zweiten Bearbeitungswerkzeugs 5 an dem zweiten freiliegenden Außenflächenabschnitt die erwähnte stirnseitige Bearbeitung des vermittels der Bearbeitungseinrichtung 1 spanend zu bearbeitenden Werkstücks 3.

Der Grundkörper 7 weist in dem in den Fig. gezeigten Ausführungsbeispiel eine durch eine mehreckige Grundfläche und eine mehreckige Deckfläche definierte prismen- bzw. quaderartige Grundform auf. Der Grundkörper 7 weist damit eine turmartige bzw. -förmige geometrische Gestalt auf, weshalb der Grundkörper 7 sonach als Lagerturm bzw. Turm bezeichnet bzw. erachtet werden kann.

Ausgehend von der prismen- bzw. quaderartigen Grundform des Grundkörpers 7 ist das erste Bearbeitungswerkzeug 4 an einer ersten (ebenen) Fläche des Grundkörpers 7, d. h. einer ersten Seitenfläche des Grundkörpers 7, gelagert und das zweite Bearbeitungswerkzeug 5 an einer von der ersten Fläche verschiedenen zweiten (ebenen) Fläche des Grundkörpers 7, d. h. einer von der ersten Seitenfläche verschiedenen zweiten Seitenfläche des Grundkörpers 7, gelagert. Die erste Fläche bzw. ersten Seitenfläche des Grundkörpers 7 ist in dem in den Fig. gezeigten Ausführungsbeispiel um einen Winkel von 90° versetzt zu der zweiten Fläche bzw. zweiten Seitenfläche des Grundkörpers 7 angeordnet und/oder ausgerichtet.

Die Bearbeitungswerkzeuge 4, 5 sind jeweils in wenigstens einem Schwenkbewegungsfreiheitsgrad, relativ zu dem Grundkörper 7 an dem Grundkörper 7 gelagert. Schwenkbewegungen können insbesondere um horizontal oder um vertikal ausgerichtete Schwenkachsen, vgl. die in den Fig. gezeigten x-, y- und z-Achse, erfolgen. Erfindungsgemäß ist eine schwenkbare Lagerung des ersten Bearbeitungswerkzeugs 4 um die horizontal ausgerichtete y-Achse und eine schwenkbare Lagerung des zweiten Bearbeitungswerkzeugs 5 um die vertikal ausgerichtete x-Achse vorgesehen. Das erste Bearbeitungswerkzeug 4 und das zweite Bearbeitungswerkzeug 5 kann zudem unabhängig voneinander translatorisch entlang der vertikal ausgerichteten x-Achse bewegbar gelagert sein, sodass das erste und das zweite Bearbeitungswerkzeug 4, 5 unabhängig voneinander in verschiedene vertikale Positionen relativ zu dem zu bearbeitenden Werkstück 3 bewegt werden können. Das erste Bearbeitungswerkzeug 4 und das zweite Bearbeitungswerkzeug 5 sind zudem translatorisch entlang der horizontal ausgerichteten z-Achse bewegbar gelagert.

Die translatorische Lagerung des ersten Bearbeitungswerkzeugs 4 entlang der y-Achse kann durch eine entsprechend bewegbare Lagerung des Tragarms 13 bzw. der Trageinrichtung 14 relativ zu dem Grundkörper 7 realisiert sein. Die translatorische Lagerung des ersten Bearbeitungswerkzeugs 4 entlang der x-Achse kann durch eine entsprechend bewegbare Lagerung des Tragarms 13 bzw. der Trageinrichtung 14 relativ zu dem Grundkörper 7 und/oder durch eine entsprechend bewegbare Lagerung des ersten Bearbeitungskopfs 11 relativ zu dem Tragarms 13 bzw. der Trageinrichtung 14 realisiert sein.

Die translatorische Lagerung des zweiten Bearbeitungswerkzeugs 5 entlang der y-Achse kann durch eine entsprechend bewegbare Lagerung des zweiten Bearbeitungskopfs 11 relativ zu dem Grundkörper 7 realisiert sein. Die translatorische Lagerung des ersten Bearbeitungswerkzeugs 4 entlang der x-Achse kann ebenso durch eine entsprechend bewegbare Lagerung des zweiten Bearbeitungskopfs 11 relativ zu dem Grundkörper 7 realisiert sein.

Selbstverständlich sind kombinierte Bewegungen eines jeweiligen Bearbeitungswerkzeugs 4, 5 in unterschiedlichen Bewegungsfreiheitsgraden möglich. Die beiden Bearbeitungswerkzeuge 4, 5 können dabei abhängig oder unabhängig voneinander in wenigstens einem Bewegungsfreiheitsgrad bewegbar bzw. bewegt sein; mithin kann das erste Bearbeitungswerkzeug 4 z. B. in einem translatorischen Bewegungsfreiheitsgrad bewegbar sein und das zweite Bearbeitungswerkzeug 5 abhängig oder unabhängig davon z. B. in einem rotatorischen Bewegungsfreiheitsgrad bewegbar bzw. bewegt sein, oder umgekehrt. In allen Fällen können geeignete Führungselemente (nicht explizit gezeigt), d. h. z. B. Führungsöffnungen, -schlitze, etc., vorhanden sein, um eine entsprechende geführte Bewegung eines bewegbar gelagerten Bearbeitungswerkzeugs 4, 5 in einem entsprechenden Bewegungsfreiheitsgrad zu ermöglichen. In allen Fällen ist einem jeweiligen Bearbeitungswerkzeug 4, 5 typischerweise wenigstens eine, insbesondere motorische, Antriebseinrichtung (nicht explizit gezeigt) zugeordnet, welche zur Erzeugung einer das jeweilige Bearbeitungswerkzeug 4, 5 in einem jeweiligen Bewegungsfreiheitsgrad versetzende Kraft eingerichtet ist.

Neben der beschriebenen bewegbaren Lagerung(smöglichkeit) der Bearbeitungswerkzeuge 4, 5 kann auch die Bearbeitungseinrichtung 1 (insgesamt) bewegbar gelagert sein. Die Bearbeitungseinrichtung 1 kann dabei insbesondere in wenigstens eine Werkstückbearbeitungsposition - eine solche ist in den Fig. 1, 2 gezeigt - und in wenigstens eine Bearbeitungswerkzeugwechselposition bewegt werden. Die Bewegung der Bearbeitungseinrichtung 1 erfolgt in oder parallel zu der Maschinenachse (z-Achse) des Bearbeitungszentrums 2. Zur Realisierung einer Bewegung der Bearbeitungseinrichtung 1 kann diese wenigstens eine dem Grundkörper 7 zugeordnete, insbesondere motorische, Antriebseinrichtung (nicht explizit gezeigt), welche zur Erzeugung einer die Bearbeitungseinrichtung 1 bzw. den Grundkörper 7 in eine Bewegung, insbesondere von einer ersten Werkstückbearbeitungsposition in wenigstens eine von der ersten Werkstückbearbeitungsposition verschiedene zweite Werkstückbearbeitungsposition und/oder in eine Bearbeitungswerkzeugwechselposition, versetzenden Antriebskraft eingerichtet ist, umfassen. Die Antriebseinrichtung kann z. B. in den Grundkörper 7 integriert sein.

Im Zusammenhang mit der Bearbeitungseinrichtung 1 ist noch zu erwähnen, dass die Bearbeitungsköpfe 11, 12 typischerweise eine Kopplungsschnittstelle (nicht explizit benannt) zur Ankopplung eines jeweiligen Bearbeitungswerkzeugs 4, 5 und eine, insbesondere motorische, Antriebseinrichtung (nicht explizit benannt) zur Erzeugung einer auf das jeweilig angekoppelte Bearbeitungswerkzeug 4, 5 übertragbaren bzw. im Betrieb des Bearbeitungswerkzeugs 4, 5 übertragenen, das Bearbeitungswerkzeug 4, 5 in eine Bewegung, d. h. insbesondere eine Drehbewegung, versetzenden Antriebskraft umfassen. Die Kopplungsschnittstelle ist typischerweise an oder in einer Gehäusestruktur des jeweiligen Bearbeitungskopfs 11, 12 angeordnet oder ausgebildet. Die Antriebseinrichtung ist typischerweise an oder in einer Gehäusestruktur des jeweiligen Bearbeitungskopfs 11, 12 angeordnet oder ausgebildet. Die Antriebseinrichtung ist typischerweise innerhalb der Gehäusestruktur angeordnet oder ausgebildet.

Ein jeweiliger Bearbeitungskopf 11, 12 umfasst sonach typischerweise eine kurz als Bearbeitungskopfgehäuse bezeichnete, typischerweise zumindest abschnittsweise, insbesondere vollständig, geschlossene, Gehäusestruktur an oder in welcher bestimmte Funktionseinheiten des Bearbeitungskopfs 11, 12 angeordnet oder ausgebildet sind. Das Bearbeitungskopfgehäuse umfasst typischerweise einen Bearbeitungskopfgehäuseinnenraum, in welchem bestimmte Funktionseinheiten des Bearbeitungskopfs 11, 12 angeordnet oder ausgebildet sind. Das Bearbeitungskopfgehäuse kann zumindest abschnittsweise, gegebenenfalls vollständig, von wenigstens einem Blenden- bzw. Wandungselement umgeben sein, welches die äußere Raumform des Bearbeitungskopfgehäuses (mit)bestimmt.

Im Zusammenhang mit der Bearbeitungseinrichtung 1 ist schließlich zu erwähnen, dass, dass die Trageinrichtung 14 typischerweise eine Kopplungsschnittstelle (nicht explizit benannt) zur Ankopplung eines Bearbeitungswerkzeugs 4, 5 bzw. eines Bearbeitungskopfs 11, 12 umfasst. Die Kopplungsschnittstelle ist typischerweise an oder in einer Gehäusestruktur der Trageinrichtung 14 angeordnet oder ausgebildet.

Das Bearbeitungszentrum 2 ist in dem in den Fig. gezeigten Ausführungsbeispiel beispielhaft als kombiniertes Bohr-Fräszentrum oder als kombiniertes Fräs-Fräszentrum oder als kombiniertes Dreh-Fräszentrum ausgebildet. Vermittels des Bearbeitungszentrums 2 lassen sich sonach, insbesondere simultan, wenigstens zwei gleiche oder verschiedene spanende Bearbeitungsprozesse eines spanend zu bearbeitenden Werkstücks 3 durchführen. Neben der Bearbeitungseinrichtung 1, welche typischerweise zum Bohren und/oder Drehen und/oder Fräsen eingerichtet ist, kann das Bearbeitungszentrum 2, wie in dem in den Fig. gezeigten Ausführungsbeispiel gezeigt, wenigstens eine weitere Bearbeitungseinrichtung 15 z. B. in Form einer Dreheinrichtung 16 umfassen, sodass kombinierte Bohr- und/oder Fräs- und/oder Drehvorgänge durchführbar sind. Das Bearbeitungszentrum 2 umfasst typischerweise im Hinblick auf den jeweils konkret durchzuführenden spanenden Bearbeitungsvorgang geeignete Werkstückabstützeinrichtungen 17, 18 bzw. Werkstückspanneinrichtungen, z. B. in Form von Lünetten, Reitstöcken, Spannfuttern, etc.

Das Bearbeitungszentrum 2 umfasst eine lager- oder magazinartige, im Bereich eines Endes der bzw. einer Bearbeitungsachse des Bearbeitungszentrums 2 angeordnete oder ausgebildete, einen lager- oder magazinartigen Aufnahmeraum 19 zur Aufnahme von einem oder mehreren an der bearbeitungseinrichtungsseitigen Lagerungseinrichtung 6 lagerbaren oder zu lagernden Bearbeitungswerkzeugen 5 umfassende Aufnahmeeinrichtung 20. Mithin können in dem Bearbeitungszentrum 2 verschiedene Bearbeitungswerkzeuge 5 gelagert bzw. vorgehalten werden, was einen einfachen und schnellen Bearbeitungswerkzeugwechsel ermöglicht. Insbesondere ist ein teil- bzw. vollautomatisiert erfolgender Bearbeitungswerkzeugwechsel möglich.

Der Aufnahmeraum 19 kann ein oder mehrere Aufnahmeabteile zur jeweiligen Aufnahme wenigstens eines Bearbeitungswerkzeugs 5 umfassen. Jeweilige Aufnahmeabteile können regalartig z. B. in Reihen und/oder Spalten oder trommelartig angeordnet sein. Jeweilige Aufnahmeabteile können mit geeigneten Sensoreinrichtungen, d. h. z. B. Gewichtsensoren, optischen Sensoren, etc., versehen sein, um z. B. zu ermitteln, ob sich ein Bearbeitungswerkzeug 5 in einem Aufnahmeabteil befindet bzw. welches Bearbeitungswerkzeug 5 sich in welchem Aufnahmeabteil befindet. Entsprechende Informationen können datenmäßig in den seitens entsprechender Sensoreinrichtungen erzeugten Sensorinformationen enthalten sein. Einem Benutzer kann vermittels der seitens entsprechender Sensoreinrichtungen erzeugten Sensorinformationen sonach ein umfassendes Abbild über die aktuelle und gegebenenfalls auch künftige Belegung des Aufnahmeraums 19 mit Bearbeitungswerkzeugen 5 gegeben werden. Selbstverständlich lassen sich entsprechende Sensorinformationen vermittels geeigneter Datenübertragungseinrichtungen bzw. -verbindungen grundsätzlich an beliebige Kommunikationspartner, d. h. z. B. eine Fertigungs- bzw. Steuerzentrale, übertragen. Analoges gilt für die Aufnahme eines oder mehrerer Bearbeitungsköpfe 12 in dem aufnahmeeinrichtungsseitigen Aufnahmeraum 19.

Der Aufnahmeraum 19 kann eine definierte Aufnahmeachse, vgl. Achse A in Fig. 2, aufweisen, in bzw. entlang welcher entsprechende Bearbeitungswerkzeuge 5 in dem Aufnahmeraum 19 angeordnet werden können. Die Aufnahmeachse kann mit einer Lagerungsachse des an dem Grundkörper 7 gelagerten Bearbeitungswerkzeugs 5 fluchten, was einen einfachen und schnellen Wechsel von Bearbeitungswerkzeugen 5 begünstigen kann. Analoges kannfür die Aufnahme eines oder mehrerer Bearbeitungsköpfe 12 in dem Aufnahmeraum 19 gelten.

Wie erwähnt, kann der bearbeitungseinrichtungsseitige Grundkörper 7 bewegbar gelagert sein, d. h. insbesondere in wenigstens eine Werkstückbearbeitungsposition und in wenigstens eine Bearbeitungswerkzeugwechselposition bewegt werden. Der bearbeitungseinrichtungsseitige Grundkörper kann sonach in eine in den Fig. 3, 4 gezeigte Bearbeitungswerkzeugwechselposition bewegbar sein, in welcher der Grundkörper 7 relativ zu der Aufnahmeeinrichtung 20 bzw. dem Aufnahmeraum 19 bewegt ist, sodass wenigstens ein an dem Grundkörper 7 gelagertes Bearbeitungswerkzeug 5, d. h. z. B. das zweite Bearbeitungswerkzeug 5, und/oder ein an dem Grundkörper gelagerter Bearbeitungskopf 12, insbesondere nebst einem an diesem angekoppelten Bearbeitungswerkzeug 5, in den Aufnahmeraum 19 übergebbar ist. Alternativ oder ergänzend kann der Grundkörper 7 in eine Bearbeitungswerkzeugwechselposition bewegbar sein, in welcher der Grundkörper 7 relativ zu der Aufnahmeeinrichtung 20 bzw. dem Aufnahmeraum 19 bewegt ist, sodass wenigstens ein in dem Aufnahmeraum 19 aufgenommenes Bearbeitungswerkzeug 5, d. h. z. B. ein zweites Bearbeitungswerkzeug 5, und/oder ein in dem Aufnahmeraum 19 aufgenommener Bearbeitungskopf 12, insbesondere nebst einem an diesem angekoppelten Bearbeitungswerkzeug 5, aus dem Aufnahmeraum19 an den Grundkörper 7 übergebbar ist.

Anhand der Fig. 3, 4 ist ersichtlich, dass der in die Bearbeitungswerkzeugwechselposition bewegte Grundkörper 7 derart an bzw. in der Aufnahmeeinrichtung 20 respektive dem Aufnahmeraum 19 angeordnet sein kann, dass ein an dem Grundkörper 7 gelagertes Bearbeitungswerkzeug 4, 5, d. h. z. B. das zweite Bearbeitungswerkzeug 5, und/oder ein an dem Grundkörper 7 gelagerter Bearbeitungskopf 12, insbesondere nebst einem an diesem angekoppelten Bearbeitungswerkzeug 5, in den Aufnahmeraum 19 übergebbar ist und/oder dass ein in dem Aufnahmeraum 19 aufgenommenes Bearbeitungswerkzeug 4, 5, d. h. z. B. ein zweites Bearbeitungswerkzeug 5, und/oder ein in dem Aufnahmeraum 19 aufgenommener Bearbeitungskopf, insbesondere nebst einem an diesem angekoppelten Bearbeitungswerkzeug 4, 5, aus dem Aufnahmeraum 19 an den Grundkörper 7 übergebbar ist.

Der Grundkörper 7 ist in dem in den Fig. gezeigten Ausführungsbeispiel in der Bearbeitungswerkzeugwechselposition zumindest abschnittsweise, insbesondere vollständig, in dem Aufnahmeraum 19 angeordnet. Der Grundkörper 7 ist für einen Wechsel eines Bearbeitungswerkzeugs 4, 5 und/oder -kopfs 11, 12 aus dem Bearbeitungsraum 23 des Bearbeitungszentrums 2, in welchem die eigentliche spanende Werkstückbearbeitung durchgeführt wird, in den Aufnahmeraum 19 bewegbar bzw. bewegt (und umgekehrt). Ersichtlich ist der Grundkörper 7 derart weit in den Aufnahmeraum 19 bewegt, dass ein zu wechselndes Bearbeitungswerkzeug 4, 5 in eine Position relativ zu einer innerhalb des Aufnahmeraums 19 befindlichen Lagerungsposition eines zu wechselnden Bearbeitungswerkzeugs 4, 5 und/oder -kopfs bewegt, welche eine entsprechenden Wechsel des Bearbeitungswerkzeugs 4, 5 und/oder -kopfs ermöglicht.

Das Bearbeitungszentrum 2 kann zur Handhabung jeweiliger Bearbeitungswerkzeuge 4, 5 bzw. -köpfe 11, 12 wenigstens eine Handhabungseinrichtung (nicht gezeigt) umfassen. Die Handhabungseinrichtung ist zweckmäßig zur Realisierung einer automatisierbaren bzw. automatisierten Handhabung jeweiliger Bearbeitungswerkzeuge 4, 5 bzw. -köpfe 11, 12 bzw., insbesondere im Zusammenhang mit der Übergabe von Bearbeitungswerkzeugen 4, 5 bzw. -köpfen 11, 12 in bzw. aus einem entsprechenden Aufnahmeraum 19 eingerichtet. Die Handhabungseinrichtung kann z. B. als eine wenigstens ein Greiferelement umfassende Greifereinrichtung ausgebildet sein oder wenigstens eine solche umfassen. Eine Greifereinrichtung kann z. B. als ein (mehrachsiger) Greifroboter ausgebildet sein.

Die Aufnahmeeinrichtung 20 bzw. der Aufnahmeraum 19 ist in dem in den Fig. gezeigten Ausführungsbeispiel durch eine ein in einem translatorischen und/oder rotatorischen Bewegungsfreiheitsgrad bewegbar gelagertes Abtrennelement 21 umfassende Abtrenneinrichtung 22 von dem Bearbeitungsraum 23 abtrennbar. Die sonach gegebene Möglichkeit einer bedarfsweisen Abtrennung der Aufnahmeeinrichtung 20 bzw. des Aufnahmeraums 19 von dem Bearbeitungsraum 23 ist vorteilhaft, als diese Tätigkeiten innerhalb des Aufnahmeraums 19 unabhängig von der Durchführung eines Bearbeitungsvorgangs erlaubt; mithin ist es möglich, Tätigkeiten innerhalb des Aufnahmeraums 20, z. B. im Zusammenhang mit einem bevorstehenden oder abgeschlossenen Bearbeitungswerkzeugwechsel, während der Durchführung eines Bearbeitungsvorgangs vorzunehmen, als die Abtrennung des Aufnahmeraums 20 von dem Bearbeitungsraum 23 z. B. sicherstellt, dass z. B. keine Späne in den Aufnahmeraum 20 gelangen können. Konkret kann die Bestückung des Aufnahmeraums 20 mit bestimmten Bearbeitungswerkzeugen 4, 5 sonach während der Durchführung eines Bearbeitungsvorgangs vorgenommen werden, was, insbesondere für eine manuelle Bestückung des Aufnahmeraums 20, ohne eine entsprechende Abtrennmöglichkeit aus sicherheitstechnischen Aspekten nicht bzw. kaum möglich wäre.

Das bewegbar gelagerte Abtrennelement 21 ist insbesondere zwischen einer Offenstellung, in welcher eine Zugangsmöglichkeit aus dem Bearbeitungsraum 23 zu der Aufnahmeeinrichtung 20 bzw. dem Aufnahmeraum 19 und eine Zugangsmöglichkeit aus der Aufnahmeeinrichtung 20 bzw. dem Aufnahmeraum 19 in den Bearbeitungsraum 23 möglich ist, und einer Schließstellung, in welcher eine Zugangsmöglichkeit aus dem Bearbeitungsraum 23 zu der Aufnahmeeinrichtung 20 bzw. zu dem Aufnahmeraum 20 und eine Zugangsmöglichkeit aus der Aufnahmeeinrichtung 20 bzw. aus dem Aufnahmeraum 19 in den Bearbeitungsraum 23 nicht möglich ist, bewegbar gelagert. Eine beispielhafte vertikale Bewegung des Abtrennelements 21 ist in Fig. 3 durch den Doppelpfeil angedeutet. Bei dem bewegbar gelagerten Abtrennelement 21 kann es sich z. B. um ein Fenster, ein Tor oder eine Tür handeln.

Bewegungen des Grundkörpers 7, insbesondere zwischen jeweiligen Bearbeitungs- und Bearbeitungswerkzeugwechselpositionen, des oder der Handhabungseinrichtung bzw. der der Handhabungseinrichtung zugehörigen Handhabungselemente sowie des oder der der Abtrenneinrichtung 22 zugehörigen Abtrennelemente 21 erfolgen typischerweise gesteuert durch eine hard- und/oder softwaremäßig implementierte bearbeitungszentrumseitige Steuereinrichtung (nicht gezeigt). Die Steuereinrichtung ist sonach zur Erzeugung von Bewegungen des Grundkörpers 7, insbesondere zwischen jeweiligen Bearbeitungs- und Bearbeitungswerkzeugwechselpositionen, des oder der der Handhabungseinrichtung zugehörigen Handhabungselemente sowie des oder der der Abtrenneinrichtung 22 zugehörigen Abtrennelemente 21 steuernden Steuerinformationen eingerichtet.

Mit der in den Fig gezeigten Bearbeitungseinrichtung 1 respektive dem in dem Fig. 1 gezeigten Bearbeitungszentrum 2 lässt sich ein Verfahren zur spanenden Bearbeitung eines spanend zu bearbeitenden Werkstücks 3 implementieren.

## Patentansprüche

1. Bearbeitungseinrichtung (1) zur spanenden Bearbeitung eines Werkstücks (3), umfassend:
ein erstes Bearbeitungswerkzeug (4) zur spanenden Bearbeitung eines vermittels der Bearbeitungseinrichtung (1) spanend zu bearbeitenden Werkstücks (3),
wenigstens ein zweites Bearbeitungswerkzeug (5) zur spanenden Bearbeitung des oder eines zweiten vermittels der Bearbeitungseinrichtung (1) spanend zu bearbeitenden Werkstücks (3), und
eine Lagerungseinrichtung (6) zur Lagerung des ersten Bearbeitungswerkzeugs (4) und des wenigstens einen zweiten Bearbeitungswerkzeugs (5), wobei die Lagerungseinrichtung (6) einen Grundkörper (7) umfasst, wobei das erste Bearbeitungswerkzeug (4) an einem ersten Grundkörperabschnitt (7a) angeordnet oder ausgebildet ist und das wenigstens eine zweite Bearbeitungswerkzeug (5) an einem von dem ersten Grundkörperabschnitt (7a) verschiedenen zweiten Grundkörperabschnitt (7b) angeordnet oder ausgebildet ist, wobei das erste Bearbeitungswerkzeug (4) in einem Schwenkbewegungsfreiheitsgrad um eine horizontal ausgerichtete Achse relativ zu dem Grundkörper (7) an dem Grundkörper (7) gelagert ist, **dadurch gekennzeichnet, dass** das zweite Bearbeitungswerkzeug (5) in einem Schwenkbewegungsfreiheitsgrad um eine vertikal ausgerichtete Achse relativ zu dem Grundkörper (7) an dem Grundkörper (7) gelagert ist.

2. Bearbeitungseinrichtung nach Anspruch 1, **dadurch gekennzeichnet, dass** der erste Grundkörperabschnitt (7a) im Bereich eines ersten freiliegenden Außenflächenabschnitts des Grundkörpers (7) ausgebildet ist und der zweite Grundkörperabschnitt (7b) im Bereich eines von dem ersten freiliegenden Außenflächenabschnitts des Grundkörpers (7) verschiedenen zweiten freiliegenden Außenflächenabschnitts des Grundkörpers (7) ausgebildet ist.

3. Bearbeitungseinrichtung nach Anspruch 2, **dadurch gekennzeichnet, dass** der erste freiliegende Außenflächenabschnitt des Grundkörpers (7) in einer ersten Raumebene angeordnet oder einer parallel zu einer solchen ausgerichtet ist und der zweite freiliegende Außenflächenabschnitt des Grundkörpers (7) in einer von der ersten Raumebene unterschiedlichen zweiten Raumebene angeordnet oder einer parallel zu einer solchen ausgerichtet ist.

4. Bearbeitungseinrichtung nach einem der vorhergehenden Ansprüche, **dadurch gekennzeichnet, dass** der Grundkörper (7) eine durch eine mehreckige Grundfläche und eine mehreckige Deckfläche definierte Grundform, insbesondere eine prismen- oder quaderartige Grundform, aufweist.

5. Bearbeitungseinrichtung nach Anspruch 4, **dadurch gekennzeichnet, dass** das erste Bearbeitungswerkzeug (4) an einer ersten Fläche des Grundkörpers (7), insbesondere einer ersten Seitenfläche des Grundkörpers (7), gelagert ist und das wenigstens eine zweite Bearbeitungswerkzeug (5) an einer von der ersten Fläche verschiedenen zweiten Fläche des Grundkörpers (7), insbesondere einer von der ersten Seitenfläche verschiedenen zweiten Seitenfläche des Grundkörpers (7), gelagert ist.

6. Bearbeitungseinrichtung nach Anspruch 5, **dadurch gekennzeichnet, dass** die erste Fläche des Grundkörpers (7) um einen Winkel kleiner 180°, insbesondere um einen Winkel von 135°, 128,5°, 120°, 108°, 90° oder 60°, versetzt zu der zweiten Fläche des Grundkörpers (7) angeordnet und/oder ausgerichtet ist.

7. Bearbeitungseinrichtung nach einem der vorhergehenden Ansprüche, **dadurch gekennzeichnet, dass** das erste Bearbeitungswerkzeug (4) an einem an dem Grundkörper (7) gelagerten ersten Bearbeitungskopf (11) gelagert ist und/oder das zweite Bearbeitungswerkzeug (5) an einem an dem Grundkörper (7) gelagerten zweiten Bearbeitungskopf (12) gelagert ist.

8. Bearbeitungseinrichtung nach einem der vorgehenden Ansprüche, **gekennzeichnet durch** wenigstens eine dem Grundkörper (7) zugeordnete, insbesondere motorische, Antriebseinrichtung, welche zur Erzeugung einer den Grundkörper (7) in eine Bewegung, insbesondere von einer ersten Bearbeitungsposition in wenigstens eine von der ersten Bearbeitungsposition verschiedene zweite Bearbeitungsposition und/oder in eine Bearbeitungswerkzeugwechselposition, versetzenden Antriebskraft eingerichtet ist.

9. Bearbeitungseinrichtung nach einem der vorhergehenden Ansprüche, **dadurch gekennzeichnet, dass** das erste Bearbeitungswerkzeug (4) ein Dreh-, Bohr- oder Fräswerkzeug ist oder ein solches umfasst und das zweite Bearbeitungswerkzeug (5) ein, gegebenenfalls profiliertes, Scheibenfräswerkzeug ist oder ein solches umfasst.

10. Bearbeitungszentrum (2) zur spanenden Bearbeitung eines Werkstücks (3), umfassend wenigstens eine Bearbeitungseinrichtung (1) nach einem der vorhergehenden Ansprüche.

11. Bearbeitungszentrum nach Anspruch 10, **gekennzeichnet durch** wenigstens eine lager- oder magazinartige, insbesondere im Bereich eines Endes einer Bearbeitungsachse des Bearbeitungszentrums (2) angeordnete oder ausgebildete, wenigstens einen Aufnahmeraum (19) zur Aufnahme von einem oder mehreren an der bearbeitungseinrichtungsseitigen Lagerungseinrichtung (6) lagerbaren oder zu lagernden Bearbeitungswerkzeugen (4, 5) umfassende Aufnahmeeinrichtung (20).

12. Bearbeitungszentrum nach Anspruch 11, **dadurch gekennzeichnet, dass** der bearbeitungseinrichtungsseitige Grundkörper (7) in eine Bearbeitungswerkzeugwechselposition bewegbar ist, in welcher er relativ zu der Aufnahmeeinrichtung (20) bewegt ist, sodass wenigstens ein an diesem gelagertes Bearbeitungswerkzeug (4, 5) und/oder ein an diesem gelagerter Bearbeitungskopf (11, 12), insbesondere nebst einem an diesem angekoppelten Bearbeitungswerkzeug (4, 5), in einen aufnahmeeinrichtungsseitigen Aufnahmeraum (19) übergebbar ist und/oder
in welcher er relativ zu der Aufnahmeeinrichtung (20) bewegt ist, sodass wenigstens ein in dem bzw. einem aufnahmeeinrichtungsseitigen Aufnahmeraum (19) aufgenommenes Bearbeitungswerkzeug (4, 5) und/oder ein in diesem aufgenommener Bearbeitungskopf (11, 12), insbesondere nebst einem an diesem angekoppelten Bearbeitungswerkzeug (4, 5), an den Grundkörper (7) übergebbar ist.

13. Bearbeitungszentrum nach einem der der Ansprüche 10 bis 12, **dadurch gekennzeichnet, dass** die Aufnahmeeinrichtung (20) durch eine wenigstens ein, insbesondere zwischen einer Offenstellung, in welcher eine Zugangsmöglichkeit aus einem Bearbeitungsraum (23) des Bearbeitungszentrums (2) zu der Aufnahmeeinrichtung (20) und eine Zugangsmöglichkeit aus der Aufnahmeeinrichtung (20) in den Bearbeitungsraum (23) des Bearbeitungszentrums (2) möglich ist, und einer Schließstellung, in welcher eine Zugangsmöglichkeit aus einem Bearbeitungsraum (23) des Bearbeitungszentrums (2) zu der Aufnahmeeinrichtung (20) und eine Zugangsmöglichkeit aus der Aufnahmeeinrichtung (20) in den Bearbeitungsraum (23) des Bearbeitungszentrums (2) nicht möglich ist, bewegbar gelagertes Abtrennelement (21) umfassende Abtrenneinrichtung (22) von einem Bearbeitungsraum (23) des Bearbeitungszentrums (2) abtrennbar ist.

14. Verwendung einer Bearbeitungseinrichtung (1) nach einem der Ansprüche 1 bis 13 zur spanenden Bearbeitung eines Werkstücks (3).

## Claims

1. Processing unit (1) for machining a
workpiece (3), comprising:
a first cutting tool (4) for machining a workpiece (3) to be machined by means of the processing unit (1),
at least one second cutting tool (5) for machining a work piece (3) for machining the or a second workpiece (3) to be machined by means of the processing unit (1), and
a holding fixture (6) to hold the first cutting tool (4) and the at least one or second cutting tool (5), wherein the holding fixture (6) comprises a base body, wherein the first cutting tool (4) is arranged on or embodied by a first base body section (7a) and the at least second cutting tool (5) is arranged on or embodied by a second base body section (7b), which is different from the first base body section (7a), wherein
the first cutting tool (4) is arranged on the base body (7) within a degree of panning movement around an axis aligned horizontally relative to the base body (7), **characterized in that** the second cutting tool (5) is arranged on the base body (7) within a degree of panning movement around an axis aligned vertically relative to the base body (7).

2. Processing unit according to claim 1, **characterized in that** that the first base body section (7a) is embodied in the area of a first exposed outer surface section of the base body (7) and the second base body section (7b) in the area of a a second exposed outer surface section of the base body (7) differing from the first exposed outer surface of the base body (7) is embodied.

3. Processing unit according to claim 2, **characterized in that** the first exposed outer surface section of the base body (7) is arranged on a first plane or on one arranged parallel to such and the second exposed outer surface section of the base body (7) is arranged on a second plane differing from the first plane or on one that is aligned parallel to such.

4. Processing unit according to one of the foregoing claims, **characterized in that** the base body (7) has a basic shape defined by a multi-corner base surface and a multi-corner top surface, in particular, a prism or cuboid basic shape.

5. Processing unit according to claim 4, **characterized in that** the first cutting tool (4) is arranged on a first plane of the base body (7), in particular, on a first side plane of the base body (7) and the at least second cutting tool (5) is arranged on a second plane differing from the first plane of the base body (7), in particular, a second side plane of the base body (7) differing from the first side plane of the base body (7).

6. Processing unit according to claim 5, **characterized in that** the first plane of the base body (7) is arranged and/or aligned offset from the second plane of the base body (7) at an angle of less than 180°, in particular at an angle of 135°, 128,5°, 120°, 108°, 90° or 60°.

7. Processing unit according to one of the foregoing claims, **characterized in that** the first cutting tool (4) is arranged on a first processing head (11) arranged on the base body (7) and/or the second cutting tool (5) is arranged on a second processing head (12), which is arranged on the base body (7).

8. Processing unit according to one of the foregoing claims, **characterized in that** at least one drive unit, in particular, a motoric drive unit, facing the base body (7) is configured to generate a driving force setting the base body (7) in motion, in particular, from a first processing position into at least a second processing position differing from the first processing position, and/or into a cutting tool swapping position.

9. Processing unit according to one of the foregoing claims, **characterized in that** the first cutting tool (4) is or comprises a turning, drilling or milling tool and the second cutting tool (5) is or comprises a potentially profiled side milling tool.

10. Processing center (2) for machining a workpiece (3), comprising at least one processing unit (1) according to one of the foregoing claims.

11. Processing center according to claim 10, **characterized in that** at least a bearing or magazine-type retaining unit (20) arranged or embodied, in particular in the area of one end of the processing center (2), comprising at least one retaining space (19) for retaining one or more cutting tools (4, 5) that are stackable or to be stacked on the holding fixture (6).

12. Processing center according to claim 11, **characterized in that** the base body (7) is movable into a cutting tool swapping position, in which it is moved relative to the retaining unit (20) in such a manner that at least one cutting tool (4, 5) and/or a processing head (11, 12) arranged on it can be transferred, in particular including a cutting tool (4, 5) coupled to it, into a retaining space (19) on the retaining unit, and/or
in which it is moved relative to the retaining unit (20) in such a manner that at least one cutting tool (4, 5) retained in the or in a retaining space (19) on the retaining unit is arranged on it and/or a processing head (11,12) held in it can be transferred, in particular, including a cutting tool (4, 5) coupled to it, to the base body (7).

13. Processing center according to one of the claims 10 to 12, **characterized in that** the retaining unit (20) is detachable from the machining area (23) of the processing center (2) by a detachment unit (22), comprising at least one movably arranged detachment element (21), in particular, between an open position, in which an access possibility from a processing chamber (23) of the processing center (2) to the retaining unit (20) and an access possibility from the retaining unit (20) to the milling area (23) of the processing center (2) is enabled, and a closed position, in which an access possibility from a milling area (23) of the processing center (2) to the retaining unit (20) and an access possibility from the retaining unit (20) to the milling area (23) of the processing center (2) is prevented.

14. Use of a processing unit (1) according to one of the claims 1 to 13 for the machining of a workpiece (3).

## Revendications

1. Dispositif d'usinage (1) pour l'usinage d'une pièce (3), comprenant :
un premier outil d'usinage (4) pour l'usinage par enlèvement d'une pièce à usiner au moyen du dispositif d'usinage (1) (3), au moins un second outil d'usinage (5) pour l'usinage par enlèvement de la pièce (3) ou d'une seconde pièce à usiner au moyen du dispositif d'usinage (1), et
un dispositif de stockage (6) pour le stockage du premier outil d'usinage (4) et de l'au moins un second outil d'usinage (5), le dispositif d'usinage (6) comprenant un corps de base (7), le premier outil d'usinage (4) étant disposé ou conçu contre une section de corps de base (7a) et l'au moins un second outil d'usinage (5) étant disposé ou conçu contre une seconde section de corps de base (7b) différente de la premmier section de corps de base (7a), où le premier outil d'usinage (4) est stocké avec un degré de liberté en pivotement autour d'un axe horizontal par rapport au corps de base (7) contre le corps de base (7), **caractérisé en ce que** le second outil d'usinage (5) est stocké avec un degré de liberté en pivotement autour d'un axe vertical par rapport au corps de base (7) contre le corps de base (7).

2. Dispositif d'usinage selon la revendication 1, **caractérisé en ce que** la première section de corps de base (7a) est conçue dans la zone d'une première section visible de surface externe du corps de base de base (7) et la seconde section de corps de base (7b) est conçue dans la zone d'une seconde section de surface externe visible différente de la première section externe du corps de base de base (7) visible.

3. Dispositif d'usinage selon la revendication 2, caractérisé en ce la première section externe visible du corps de base (7) est disposée à un premier niveau ou est orientée parallèlement à un tel premier niveau et en ce que la seconde section externe visible du corps de base (7) est disposée à un second niveau différent du premier niveau ou est orientée parallèlement à un tel second niveau.

4. Dispositif d'usinage selon l'une quelconque des revendications précédentes, **caractérisé en ce que** le corps de base (7) présente une forme de base définie par une surface de base polygonale et une surface de recouvrement polygonale, en particulier une forme de base prismatique ou parallèlipipédique.

5. Dispositif d'usinage selon la revendication 4, **caractérisé en ce que** le premier outil d'usinage (4) est disposé contre une première surface du corps de base (7), en particulier contre une première surface latérale du corps de base (7), et l'au moins un second outil d'usinage (5) est disposé contre une seconde surface différente de la première surface du corps du base (7), en particulier contre une seconde surface latérale du corps de base (7) différente de la première surface latérale.

6. Dispositif d'usinage selon la revendication 5, **caractérisé en ce que** la première surface du corps de base (7) est disposée et/ou orientée sous un angle inférieur à 180°, en particulier sous un angle de 135°, 128,5°, 120°, 108°, 90° ou 60° de décalage par rapport à la seconde surface du corps de base (7).

7. Dispositif d'usinage selon l'une quelconque des revendications précédentes, **caractérisé en ce que** le premier outil d'usinage (4) est disposé contre une première tête d'usinage (11) disposée contre le corps de base (7) et/ou **en ce que** le second outil d'usinage (5) et disposé contre une seconde tête d'usinage (12) disposée contre le corps de base (7).

8. Dispositif d'usinage selon l'une quelconque des revendications précédentes, **caractérisé par** au moins un dispositif d'entraînement attribué au corps de base (7), en particulier motorisé, disposé pour créer une force d'entraînement qui déplace le corps de base (7) en un mouvement, en particulier d'une première position d'usinage vers au moins une seconde position d'usinage différente de la première position d'usinage et/ou vers une position de changement d'outil d'usinage.

9. Dispositif d'usinage selon l'une quelconque des revendications précédentes, **caractérisé en ce que** le premier outil d'usinage (4) est un outil de tournage, de perçage ou de fraisage ou en comprend un et **en ce que** le second outil d'usinage (5) est un outil de fraisage par disque, éventuellement profilé, ou en comprend un.

10. Centre d'usinage (2) pour l'usinage par enlèvement d'une pièce (3) comprenant au moins un dispositif d'usinage (1) selon l'une quelconque des revendications précédentes.

11. Centre d'usinage selon la revendication 10, **caractérisé par** au moins un réceptacle (20) de type entrepôt ou magasin, disposé ou conçu en particulier dans la zone d'une extrémité d'un axe d'usinage du centre d'usinage (2), comprenant au moins un espace de réception (19) pour réceptionner un ou plusieurs outils d'usinage (4, 5) pouvant être disposés ou destinés à être disposés contre le dispositif de stockage (6) du côté du dispositif d'usinage.

12. Centre d'usinage selon la revendication 11, **caractérisé en ce que** le corps de base (7) du côté du dispositif d'usinage est mobile dans une position de changement d'outil d'usinage, dans laquelle on le déplace par rapport au réceptacle (20) de sorte qu'au moins un d'outil d'usinage (4, 5) disposé contre lui et/ou une tête d'usinage (11, 12) disposée contre lui, en particulier tout contre un outil d'usinage (4, 5) couplé à lui , peut être transféré dans un espace de réception (19) du côté du réceptacle, et/ou dans lequel on le déplace par rapport au réceptacle (20) de sorte qu'au moins un outil d'usinage (4, 5) reçu dans le ou resp. un espace de réception (19) du côté du réceptacle et/ou une tête d'usinage (11, 12) reçue dans celui-ci, en particulier tout contre un outil d'usinage (4, 5) couplé à lui, peut être transféré contre le corps de base (7).

13. Centre d'usinage selon l'une quelconque des revendications 10 à 12, **caractérisé en ce que** le réceptacle(20) peut être séparé d'un espace d'usinage (23) du centre d'usinage (2) par un dispositif de séparation (22) comprenant un élément de séparation (21) disposé de façon mobile entre une position ouverte, dans laquelle une possibilité d'accès hors d'un espace d'usinage (23) du centre d'usinage (2) dans le réceptacle (20) et une possibilité d'accès hors du réceptacle (20) dans l'espace d'usinage (23) du centre d'usinage sont possibles, et une position fermée, dans laquelle une possibilité d'accès hors d'un espace d'usinage (23) du centre d'usinage (2) vers un réceptacle (20) et une possibilité d'accès hors du réceptacle (20) dans l'espace d'usinage (23) du centre d'usinage (2) ne sont pas possibles.

14. Utilisation d'un dispositif d'usinage (1) selon l'une quelconque desrevendications 1 à 13 pour l'usinage par enlèvement d'une pièce (3).
